# EUROPÄISCHE PATENTSCHRIFT

(11) **EP 3 597 369 B1**
(45) Veröffentlichungstag und Bekanntmachung des Hinweises auf die Patenterteilung: **02.12.2020**
(21) Anmeldenummer: 19183830.9
(22) Anmeldetag: 02.07.2019
(51) Int. Cl.: B25B 29/02

(54) **VERFAHREN ZUM DOKUMENTIERTEN ANZIEHEN ODER NACHZIEHEN EINER SCHRAUBVERBINDUNG**
METHOD FOR DOCUMENTED TIGHTENING OR RETIGHTENING A SCREW CONNECTION
PROCÉDÉ DE VISSAGE OU DE DÉVISSAGE ATTESTÉ D'UN RACCORD À VIS

(30) Priorität: 17.07.2018 DE 102018117256
(43) Veröffentlichungstag der Anmeldung: 22.01.2020
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Christophersen Patentanwälte

(56) Entgegenhaltungen:
- WO-A2-2008/092768
- DE-A1-102012 106 503
- DE-A1-102016 113 196
- US-A1- 2010 005 663

## Beschreibung

Die Erfindung betrifft ein Verfahren zum dokumentierten Anziehen oder Nachziehen einer Schraubverbindung aus einem Gewindebolzen und einer darauf aufgeschraubten, auf einer Flanschfläche abgestützten Mutter nach dem Oberbegriff des Patentanspruchs 1.

Bei derartigen, z. B. aus der DE 10 2004 043 146 B3 bekannten Verfahren wird auf das freie Gewindeende des Gewindebolzens eine Wechselbuchse aufgeschraubt. Dies erfolgt mittels eines integrierten elektrischen Antriebs. Die Wechselbuchse ist Bestandteil eines gegen die Flanschfläche abgestützten, hydraulisch betriebenen Spannzylinders, so dass sie unter gleichzeitiger Längsdehnung des Gewindebolzens durch Hydraulikkraft angezogen werden kann, während die Gewindemutter durch Drehen einer drehfest mit der Mutter verbundenen Drehhülse beigedreht wird. Auch dieses Beidrehen erfolgt mittels des elektrischen Antriebs. In Bezug auf diesen Antrieb beschreibt die DE 10 2004 043 146 B3 einen gemeinsamen elektrischen Antriebsmotor für das Drehen der Wechselbuchse und für das Drehen der Drehhülse. Dabei wird, durch entsprechendes Umschalten eines an eine Fernbedienung angeschlossenen Schaltgetriebes, in einer ersten Betriebsart nur die Wechselbuchse angetrieben, und in einer zweiten Betriebsart nur die Drehhülse. Beschrieben ist ferner ein Drehwinkel-Messgeber an dem elektrischen Antriebsmotor, mit dessen Hilfe sich die im Eingriff befindliche Gewindelänge überprüfen, sowie eine Aussage bezüglich der Längung des Gewindebolzens machen lässt.

Ähnlich arbeitende Schraubenspannvorrichtungen sind beispielsweise aus der WO 2008/092768 A2 oder der WO 2010/054959 A1 bekannt.

Beim Anziehen bzw. Nachziehen derartiger Schraubverbindungen werden häufig die dabei tatsächlich verwendeten Betriebsparameter sowie allgemeine, den jeweiligen Schraubfall betreffende Daten unzureichend dokumentiert. Bei diesen Daten kann es sich z.B. um das Fabrikat, die Art oder den Typ des Gewindebolzens oder der Mutter handeln, oder um die verwendeten Anzugs- und Drehmomente der Bolzen und/oder Muttern. Aber gerade die vollständige Dokumentation kann bei Schraubverbindungen von großer Relevanz sein, sofern z.B. an den Schraubverbindungen eine permanente Kontrolle notwendig ist und aus Sicherheitsgründen eine ausreichend feste Schraubverbindung nachgewiesen werden muss, beispielsweise bei starke druckbelasteten Behältern, bei Reaktor- oder Lagerbehältern mit chemischen oder nuklearen Gefahrgütern.

Bei derartigen Schraubspannzylindern muss aus Sicherheitsgründen auf eine ausreichende Überdeckungslänge der Gewindeverbindungen der Wechselbuchse mit dem freien Ende des Gewindebolzens geachtet werden. Greift die Wechselbuchse auf zu kurzer Länge den Gewindebolzen, kann es zum Abriss kommen. Aus diesem Grunde wurden bereits Maßnahmen vorgeschlagen, die im Eingriff befindliche Gewindelänge zu sensieren und den Aufbau von Hydraulikkraft im Spannzylinder zu blockieren, sofern ein vorgegebener Wert der im Eingriff befindlichen Gewindelänge nicht sichergestellt ist.

Der Erfindung liegt die **Aufgabe** zugrunde, beim Anziehen und Nachziehen von hochfesten Schraubverbindungen mittels axial arbeitender Spannzylinder eine hohe Betriebssicherheit zu erreichen sowie eine für den Schraubfall spezifische Datendokumentation mit wenig Aufwand für den Bediener zu ermöglichen, welche Dokumentation Voraussetzung für die Qualität und Reproduzierbarkeit des Schraubprozesses ist.

Gelöst wird diese Aufgabe durch ein Verfahren mit den Merkmalen des Patentanspruchs 1, bei dem, unter Einsatz einer mit einem Dokumentationsmodul versehenen Prozesssteuereinheit,
a) die Schraubverbindung mittels einer an dem Spannzylinder angeordneten Erfassungseinrichtung identifiziert, und ein die einzelne Schraubverbindung kennzeichnendes Identitätsmerkmal in dem Dokumentationsmodul gespeichert wird,
b) nach dem Aufsetzen des Spannzylinders auf die Schraubverbindung mittels eines an dem Spannzylinder angeordneten Abstandssensors ein Abstand zu der Flanschfläche erfasst, und der Prozesssteuereinheit ein entsprechendes erstes Abstandssignal übermittelt wird,
c) sodann, in der ersten Betriebsart, die Wechselbuchse auf das freie Gewindeende aufgeschraubt, und mittels des Abstandssensors erneut der Abstand zu der Flanschfläche erfasst, und der Prozesssteuereinheit ein entsprechendes zweites Abstandssignal übermittelt wird,
d) die Prozesssteuereinheit aus der Differenz der Abstandssignale die Größe des Gewindeeingriffs zwischen der Wechselbuchse und dem freien Gewindeende des Gewindebolzens ermittelt, und die Prozesssteuereinheit nur bei Vorliegen eines vorgegebenen Mindestgewindeeingriffs ein Umschalten in die zweite Betriebsart freigibt,
e) nach dem Umschalten in die zweite Betriebsart der Gewindebolzen längsgedehnt wird, und ein für die an der Wechselbuchse wirkende Zugkraft und / oder den aufgewendeten hydraulischen Druck charakteristischer Lastwert in dem Dokumentationsmodul gespeichert und dem jeweiligen Identitätsmerkmal zugewiesen wird,
f) während des Längsdehnens die Drehhülse angetrieben wird, und das Antriebsmoment und / oder der zurückgelegte Drehwinkel der Drehhülse in dem Dokumentationsmodul gespeichert und dem jeweiligen Identitätsmerkmal zugewiesen wird.

Der Ablauf des erfindungsgemäßen Verfahren erfolgt daher in wesentlichen Verfahrensschritten unter der Kontrolle einer elektronischen Prozesssteuereinheit. Vorzugsweise ist diese räumlich getrennt von dem Spannzylinder angeordnet. Die Kommunikation zwischen der Prozesssteuereinheit und den Komponenten der Spannvorrichtung erfolgt per Kabel oder drahtlos. Bestandteil der Prozesssteuereinheit ist ein Dokumentationsmodul, in dem die für den Schraubfall spezifische Daten gespeichert bzw. abgelegt werden, um so auch nach Abschluss des Schraubprozesses zu einer Überprüfung und Reproduzierbarkeit des individuellen Schraubprozesses zu gelangen. Die Dokumentation ermöglicht es z.B., die für das Verschraubungsergebnis wesentlichen Parameter, welche bei der Durchführung des Schraubprozesses eingestellt waren, zu überprüfen bzw. später zu belegen.

Im Rahmen der Durchführung des Verfahrens wird die jeweilige Schraubverbindung mittels einer an dem Spannzylinder angeordneten Erfassungseinrichtung identifiziert. Das Identifizieren kann z.B. durch Erfassen oder optisches Auslesen eines an der freien Stirnfläche des Gewindebolzens vorhandenen RFID-Tags, QR-Codes oder Barcodes erfolgen.

Nach dem Aufsetzen des Spannzylinders auf die Schraubverbindung in eine Position, in welcher das Innengewinde der Wechselbuchse gerade in Kontakt zu dem Gewindeende des Gewindebolzens tritt, ohne dass die Gewinde bereits in Eingriff stehen, wird mittels eines an dem Spannzylinder angeordneten Abstandssensors ein Abstand zu der Flanschfläche erfasst. Der Prozesssteuereinheit wird ein entsprechendes Abstandssignal als ein erstes Abstandssignal übermittelt. Erst dann wird, in der ersten Betriebsart des Spannzylinders, die Wechselbuchse durch den elektrischen Antrieb auf das freie Gewindeende geschraubt. Mittels des Abstandssensors wird erneut der Abstand zu der Flanschfläche erfasst, und der Prozesssteuereinheit ein entsprechendes zweites Abstandssignal übermittelt. Aus der Differenz der beiden Abstandssignale errechnet der Prozessor der Steuereinheit die durch das Aufschrauben erzielte Länge des Gewindeeingriffs zwischen der Wechselbuchse und dem freien Gewindeende des Gewindebolzens.

Nur wenn der Prozessor eine erzielte Länge des Gewindeeingriffs errechnet, welche mindestens die Größe eines aus Sicherheitsgründen verlangten, vorgegebenen Mindestgewindeeingriffs aufweist, gibt die Prozesssteuereinheit ein Umschalten in die zweite Betriebsart frei bzw. lässt eine solches Umschalten erst zu. Dieses Umschalten, welches automatisch oder alternativ auch von Hand erfolgen kann, ist Voraussetzung für den anschließenden hydraulischen Druckaufbau im Spannzylinder.

Nach dem wirksamen Umschalten in die zweite Betriebsart wird der eigentliche Spannprozess gestartet, d. h. der Gewindebolzen wird, wie bei derartigen Spannzylindern üblich, in Bolzenlängsrichtung gedehnt bzw. gestreckt. Die dabei verwendeten oder eingestellten Betriebsparameter werden im Dokumentationsmodul gespeichert und so zu Prüfzwecken dokumentiert. Unter anderem wird ein für die an der Wechselbuchse wirkende Zugkraft und/oder den aufgewendeten hydraulischen Druck charakteristischer Lastwert in dem Dokumentationsmodul gespeichert und dem jeweiligen Identitätsmerkmal der Schraubverbindung zugewiesen und damit in einem gemeinsamen Datensatz zugeordnet.

Während des Aufrechterhaltens der Längsdehnung wird außerdem die Drehhülse mittels des elektrischen Antriebs angetrieben, und das dabei aufgewendete Drehmoment und/oder der von der Drehhülse zurückgelegte Drehwinkel wird ebenfalls in dem Dokumentationsmodul gespeichert und dem jeweiligen Identitätsmerkmale der Schraubverbindung zugewiesen.

Vorteilhaft ist es, wenn in der ersten Betriebsart das Aufschrauben der Wechselbuchse zunächst mit einer vorgegebenen Drehzahl und/ oder einem vorgegebenen Drehmoment erfolgt und anschließend mit demgegenüber reduzierter Drehzahl und/ oder einem reduzierten Drehmoment, vorzugsweise mit mehr und mehr reduzierter Drehzahl und/ oder mehr und mehr reduziertem Drehmoment. Auf diese Weise werden unerwünscht hohe Kraftimpulse beim Aufschrauben der letzten Windungen der Wechselbuchse vermieden, wodurch sich die Lebensdauer der Wechselbuchse erhöht und allgemein die Bauteile des Spannzylinders vor zu hohen Impulsbelastungen geschont werden.

Kontrolliert wird die Reduktion der Drehzahl oder des Drehmoments durch eine entsprechende Datenverarbeitung und Datenauswertung in der Prozesssteuereinheit, indem die Drehzahl bzw. das Drehmoment durch die Prozesssteuereinheit gesteuert wird, und zwar in Abhängigkeit von den während des Aufschraubens der Wechselbuchse erfassten und laufend aktualisierten Abstandssignalen, welche der Abstandssensor liefert.

In der Praxis wird die Güte und die Reproduzierbarkeit des Schraubenspannprozesses auch durch Umgebungsbedingungen beeinflusst wie z. B. durch Oberflächen, welche nicht wirklich eben und glatt sind, oder durch das Vorhandensein von Fremdkörpern im Bereich der Anlage- und Abstützflächen der Mutter und des Spannzylinders.

Für die Güte und die Reproduzierbarkeit des Schraubenspannprozesses ist es daher von Vorteil, noch vor dem eigentlichen Spannprozess einen Nullabgleich vorzunehmen, um anschließend exaktere Belastungswerte zu erreichen bzw. solche für die Dokumentation erfassen zu können. Zu diesem Zweck wird mit einer Ausgestaltung des Verfahrens vorgeschlagen, dass nach dem Umschalten in die zweite Betriebsart die dann folgenden Verfahrensschritte automatisch und wie folgt durch die Prozesssteuereinheit gesteuert ablaufen:
- Aufbau zunächst einer hydraulischen Vorkraft, die mit beispielsweise 100 bar nur 2% bis 12% der im weiteren Verfahren erzielten hydraulischen Endkraft beträgt,
- Antrieb der Drehhülse bis zum Anlegen der Mutter an der Flanschfläche, wobei die sich dabei ergebende Drehlage der Drehhülse erfasst und als ein Drehwinkel-Ausgangswert gespeichert wird,
- Aufbau der hydraulischen Endkraft, beispielsweise 1500 bar,
- Erneuter Antrieb der Drehhülse bis zum erneuten Anlegen der Mutter an der Flanschfläche, hierbei Erfassen des gegenüber dem Drehwinkel-Ausgangswert zurückgelegten Drehwinkels der Drehhülse. Der so erzielte Drehwinkel wird ebenfalls, als das Ergebnis des Schraubenspannprozesses, im Dokumentationsmodul mit den anderen Daten des für die Verschraubung spezifischen Datensatzes abgelegt.

Zusammen mit den Betriebsdaten der jeweiligen Verschraubung können auch weitere, für die spätere Reproduzierbarkeit wichtige Daten in dem Dokumentationsmodul abgespeichert und dem jeweiligen Identitätsmerkmal zugewiesen werden. Z.B. kann das Datum, an dem der Verschraubungsprozess durchgeführt wurde, ebenfalls im Datensatz enthalten sein.

Der Antrieb der Wechselbuchse und der Antrieb der Drehhülse erfolgen entweder durch einen einzigen, also gemeinsamen Elektromotor, oder durch zwei getrennte Elektromotoren. Erfolgt der elektrische Antrieb der Wechselbuchse und der elektrische Antrieb der Drehhülse durch ein- und demselben Elektromotor, so ist ein mechanisches Umschaltgetriebe vorhanden, welches in der ersten Betriebsart seine erste Schaltstellung, und in der zweiten Betriebsart seine zweite Schaltstellung einnimmt und in der ersten Betriebsart für den Antrieb der Wechselbuchse und in der zweiten Betriebsart für den Antrieb der Drehhülse sorgt.

Alternativ können der elektrische Antrieb der Wechselbuchse und der elektrische Antrieb der Drehhülse durch zwei getrennte Elektromotoren erfolgen. In diesem Fall ist die Prozesssteuereinheit signaltechnisch ausgebildet, abhängig von der Betriebsart entweder nur den einen oder nur den anderen Elektromotor freizugeben.

Vorzugsweise befinden sich der Elektromotor, das Umschaltgetriebe und auch der Abstandssensor nicht unmittelbar in dem üblicherweise hoch druckfesten Metallgehäuse des Spannzylinders, sondern sie sind baulich in einem Aufsteckmodul zusammengefasst, welches fest mit dem eigentlichen Spannzylinder verbunden ist. Das Aufsteckmodul ist auf den eigentlichen Spannzylinder aufgesetzt und es vereinigt in sich die Funktionen des Umschaltens zwischen den beiden Betriebsarten, des elektrischen Drehantriebs der Wechselbuchse und der Drehhülse, sowie ferner die Funktion des Abstandssensors, welcher den Abstand zur jeweiligen Unterlage erfasst. Das Aufsteckmodul eignet sich auch für eine Nachrüstung an bereits vorhandenen Spannzylindern.

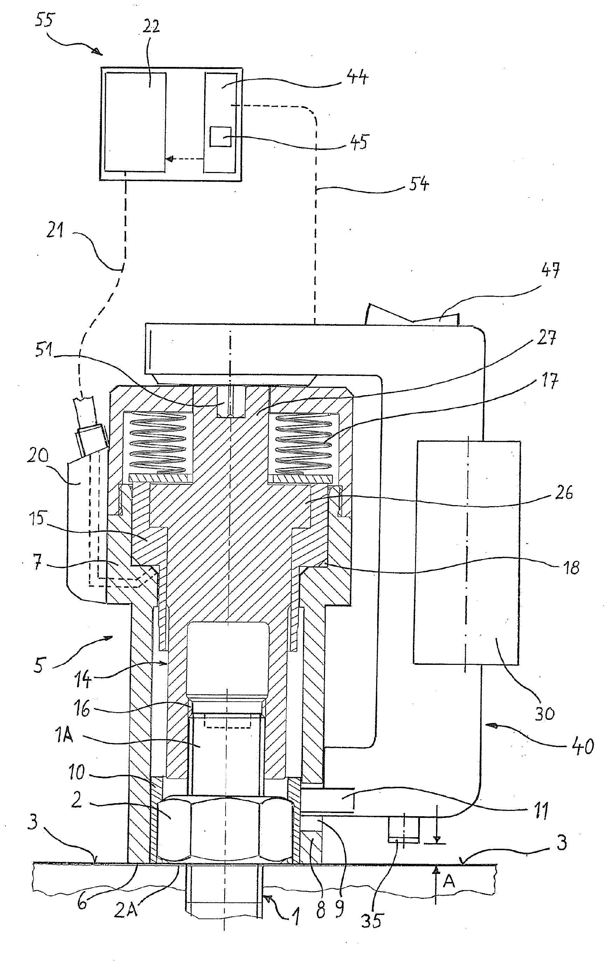

Weitere Einzelheiten und Vorteile ergeben sich aus der nachfolgenden Beschreibung eines auf der Zeichnung wiedergegebenen Ausführungsbeispiels. Darin zeigt
Fig. 1 eine teils im Schnitt und teils in Seitenansicht wiedergegebene Schraubenspannvorrichtung einschließlich eines hydraulischen Spannzylinders und der stark schematisch wiedergegebenen Peripherieelemente, welche für das Durchführen des Schraubenspannverfahrens erforderlich sind.

Auf der Zeichnung dargestellt ist ein hydraulisch betriebener Schraubenspannzylinder 5. Dieser dient dem Anziehen, vor allem Nachziehen, und ggf. auch dem Lösen einer Schraubverbindung aus einem ein Gewindeelement bildenden Gewindebolzen 1 und einer auf das Gewinde des Gewindeelements 1 aufgeschraubten und auf einer Flanschfläche 3 abgestützten Gewindemutter 2.

Dargestellt ist der Spannzylinder 5 in seiner Betriebsstellung vor dem Aufbringen von Hydraulikdruck. In dieser Stellung ist er bereits soweit abgesenkt, dass er sich mit seiner Unterseite 6 auf der vorzugsweise ebenen Flanschfläche 3 abstützt, auf der sich auch die Mutter 2 mit ihrer Aufstandsfläche 2A abstützt.

Mit dem Spannzylinder 5 lässt sich in Bolzenlängsrichtung eine Vorspannkraft auf den Gewindebolzen 1 aufbringen, wodurch sich der Gewindebolzen 1 etwas in Längsrichtung dehnt. Während des Aufrechterhaltens dieses Dehnens wird die Gewindemutter 2 angezogen bzw. nachgezogen.

Eine in einem Zylindergehäuse 7 des Spannzylinders 5 drehbar angeordnete Wechselbuchse 14 ist an ihrem einen Ende mit einem Innengewinde 16 versehen. Mit diesem Gewinde wird die Wechselbuchse 14 vor Beginn des Spannprozesses durch Drehen der Wechselbuchse 14 auf jenen freien Gewindeendabschnitt 1A des Gewindeelements 1 aufgeschraubt, der nach oben über die Mutter 2 hinausragt. Mit dem Aufschrauben der Wechselbuchse 14 einher geht ein entsprechendes Absenken des ganzen Spannzylinders 5 bis zur Auflage der Unterseite 6 auf der Flanschfläche 3, da die Wechselbuchse 14 kein oder nur ein geringes Längsspiel relativ zu dem Zylindergehäuse 7 hat.

Anschließend wird die so mit dem Gewindeelement 1 verschraubte Wechselbuchse 14 hydraulisch unter Zug gesetzt, wodurch sich die Verschraubung in Längsrichtung dehnt. Die Aufstandsfläche 2A der Gewindemutter 2 kommt dadurch frei, so dass sich die Gewindemutter 2 dann mit nur wenig Drehwiderstand drehen und auf diese Weise gegen die Unterlage, also gegen die Flanschfläche 3 oder ggf. gegen eine Unterlegscheibe anziehen bzw. Nachziehen lässt.

Der hydraulische Spannmechanismus befindet sich in dem druckfesten Zylindergehäuse 7. Dieses kann sich auch modulartig aus mehreren Zylinderabschnitten zusammensetzen. Die starre Fortsetzung des Zylindergehäuses 7 ist ein Stützrohr 8. Dieses ist entweder wie dargestellt selbst Teil des Zylindergehäuses 7, oder ein separates Bauteil. Das Stützrohr 8 ist zu der Schraubverbindung hin offen, umgibt die Gewindemutter 2 und stützt sich mit der Unterseite 6 gegen die Unterlage bzw. Flanschfläche A ab. Die Unterlage 3 bildet daher beim Spannprozess das Widerlager. Der Spannprozess erfolgt durch Zug der Wechselbuchse 14 an dem Gewindeendabschnitt 1A, wobei zum Nachziehen der Mutter 2 diese nach unten geschraubt wird, bis sie mit ihrer Aufstandsfläche 2A wieder fest gegen die Unterlage 3 anliegt.

Das Stützrohr 8 ist zu einer Seite hin mit einer Öffnung 9 von solcher Größe versehen, dass durch die Öffnung 9 hindurch die Mutter 2 drehbar ist, um die Mutter nachzuziehen. Dies ist natürlich nur möglich, wenn zugleich die hydraulische Spannvorrichtung arbeitet, und daher die Mutter 2 nicht durch erhebliche Reibung belastet ist. Das Drehen der Gewindemutter 2 erfolgt mittels einer die Mutter formschlüssig umschließenden Drehhülse 10, die drehbar in dem Stützrohr 8 gelagert ist. Angetrieben wird die Drehhülse 10 über ein Getriebe 11, welches seitlich an dem Stützrohr 8 angeordnet ist und durch dessen Öffnung 9 hindurch arbeitet.

Das Zylindergehäuse 7 ist außen mit einem Hydraulikanschluss 20 versehen, über den ein hydraulischer Arbeitsraum 18 im Inneren des Werkzeugs über eine flexible, aber druckfeste Hydraulikleitung 21 mit einer starken Hydraulikpumpe 22 verbunden ist. Die Hydraulikpumpe 22 ist getrennt von dem Schraubenspannzylinder 5 in einem externen Versorgungsmodul 55 angeordnet, welches auf der Zeichnung nur stark schematisch wiedergegeben ist.

Über den Hydraulikanschluss 20 gelangt unter hohem Druck stehendes Hydraulikfluid in den Arbeitsraum 18, wodurch ein längsbeweglich in dem Zylindergehäuse 7 gelagerter Kolben 15 mit Hydraulikdruck beaufschlagt wird. Dadurch wird der Kolben 15 hochgedrückt. Dies erfolgt entgegen der Kraft einer den Kolben 15 beaufschlagenden Feder 17. Die Feder 17 dient als Kolbenrückstellfeder und beaufschlagt den Kolben 15 mit einer Kraft die bestrebt ist, den Kolben 15 in seiner Grundstellung zu halten, in der der hydraulische Arbeitsraum 18 sein kleinstes Volumen hat.

Der Kolben 15 umgibt in Ringform die Wechselbuchse 14. Der Kolben 15 ist außen gegen das Zylindergehäuse 7 abgedichtet und ist innen mit einer umlaufenden Stufe versehen, die eine Mitnehmerfläche bildet, an der sich die Wechselbuchse 14 mit einem radial erweiterten Abschnitt 26 abstützt. Dadurch ist die Wechselbuchse 14 durch den Kolben 15 mitnehmbar. Ohne Druckbelastung ist die Wechselbuchse 14 gegenüber dem Kolben 15 und gegenüber dem Zylindergehäuse 7 frei drehbar.

Die Wechselbuchse 14 befindet sich ebenso wie der Kolben 15 zentral auf der Längsachse des Zylindergehäuses 7 und setzt sich aufeinanderfolgend zusammen aus einem Abschnitt mit dem Innengewinde 16, welches auf den Gewindeendabschnitt 1A des Gewindebolzens 1 aufgeschraubt wird, aus dem radial erweiterten Abschnitt 26 und aus einem Antriebsabschnitt 27. Der Antriebsabschnitt 27 ist mit einem Antriebsvierkant versehen, in den eine Welle eines in Abhängigkeit von Steuersignalen einer Prozesssteuereinheit betriebenen elektrischen Antriebs angreift, um so die Wechselbuchse 14 um ihre Längsachse zu drehen und sie entweder, vor dem Spannprozess, unter gleichzeitigem Absenken des Zylindergehäuses 7 auf den Gewindeendabschnitt 1A aufzuschrauben oder, nach dem Spannprozess, unter gleichzeitigem Anheben des Zylindergehäuses 7 wieder von dem Gewindeendabschnitt 1A abzuschrauben.

Frühestens wenn gesichert ist, dass die Wechselbuchse 14 mit ausreichend langem Gewindeeingriff auf den Gewindeendabschnitt 1A aufgeschraubt ist, darf der hydraulische Spannprozess gestartet werden. Um dies sicherzustellen, verfügt die Schraubenspannvorrichtung unter anderem über einen Abstandssensor 35. Dieser ist so ausgebildet und so an dem Spannzylinder 5 selbst oder an einem Aufsteckmodul 40 starr befestigt, dass er den Abstand A zu der festen Unterlage 3 erfasst.

Ist der Spannzylinder 5 auf der Achse der jeweiligen Verschraubung derart positioniert, dass das Ende des Innengewindes 16 in Kontakt oder nahezu in Kontakt mit dem Ende des Gewindeendabschnitts 1A tritt, ohne dass es bereits zu einem Verschrauben gekommen ist, erfasst der Abstandssensor 35 den in dieser Situation vorhandenen Abstand A zu der Flanschfläche 3. Der Prozesssteuereinheit 44 wird durch den Sensor 35 ein entsprechendes erstes Abstandssignal A1 übermittelt.

Sodann wird, weiterhin in der ersten Betriebsart der Schraubenspannvorrichtung, die Wechselbuchse 14 elektrisch angetrieben auf das Gewindeende 1A aufgeschraubt. Ist dies geschehen, wird durch den Abstandssensor 35 erneut der Abstand A zu der Flanschfläche 3 erfasst, und der Prozesssteuereinheit 44 ein entsprechend kleineres, zweites Abstandssignal A2 übermittelt. Die Prozesssteuereinheit 44 ermittelt aus der Differenz A1 minus A2 der Abstandssignale die Länge des Gewindeeingriffs zwischen dem Innengewinde 16 der Wechselbuchse 14 und dem freien Gewindeende 1A des Gewindebolzens.

Nur wenn die Prozesssteuereinheit 44 aus der Differenz der Abstandssignale A1, A2 das Vorhandensein eines intern in der Steuereinheit vorgegebenen Mindestgewindeeingriffs errechnet, gibt sie ein wirksames Umschalten von der ersten Betriebsart in eine zweite Betriebsart frei. Die Freigabe wird dem Bediener angezeigt, so dass er das Umschalten von Hand durchführen kann, vorzugsweise durch Betätigen eines Handschalters 47, welcher sich an dem fest mit dem Spannzylinder 5 verbindbaren Aufsteckmodul 40 befindet.

Das motorgetriebene Aufschrauben der Wechselbuchse 14 erfolgt unter der Kontrolle und in Abhängigkeit von Steuersignalen der Prozesssteuereinheit 44.

In der zweiten Betriebsart und nur in dieser ist die Hydraulikpumpe 22 dazu freigegeben, aufgrund entsprechender Hydraulik-Steuersignale der Prozesssteuereinheit 44 über die Hydraulikleitung 21 Hydraulikdruck im Arbeitsraum 18 des Spannzylinders aufzubauen. Außerdem ist bzw. sind in der zweiten Betriebsart der elektrische Antrieb bzw. sind elektrischen Antriebe in dem Aufsteckmodul 40 so geschaltet, dass der Drehantrieb der Wechselbuchse 14 gesperrt, und nur der Drehantrieb der Drehhülse 10 freigegeben ist.

Denn für den eigentlichen Spannprozess arbeitet der Schraubenspannzylinder 5 zwar hydraulisch. Für einen halbautomatischen Betrieb des Spannzylinders ist jedoch zusätzlich ein elektrischer Antrieb 30 oder sind alternativ zwei elektrische Antriebe vorhanden. Auch der Antrieb 30 bzw. alternativ die zwei Antriebe arbeiten in Abhängigkeit von Steuersignalen der Prozesssteuereinheit.

Sind zwei elektrische Antriebe vorhanden, so treibt der erste Antriebsmotor nur die in dem Schraubenspannzylinder drehbar angeordnete Wechselbuchse 14 an. Der zweite Antriebsmotor treibt in diesem Fall nur die Drehhülse 10 an, um die Gewindemutter 2 zu drehen. Aus Sicherheitsgründen ist in der Steuereinheit 44 schaltungstechnisch implementiert, dass entsprechend der eingestellten Betriebsart entweder nur der eine, oder nur der andere Antriebsmotor elektrisch freigeschaltet ist.

Dieselbe Schaltlogik wird bei Einsatz eines gemeinsamen Antriebsmotors 30 durch ein mechanisches Umschaltgetriebe erreicht, welches vom Benutzer mittels des Handschalters 47 umgeschaltet wird. Das Umschaltgetriebe befindet sich in dem Antriebsweg, welcher von der Ausgangswelle des Antriebsmotors 30 einerseits zu der Wechselbuchse 14 und andererseits zu der Drehhülse 10 führt. Das Umschaltgetriebe gibt in der ersten Betriebsart nur den Antriebsweg zur Wechselbuchse 14 und in der zweiten Betriebsart nur den Antriebsweg zur Drehhülse 10 frei. Der jeweils andere Antriebsweg ist aus Sicherheitsgründen gesperrt bzw. passiv.

Das Umschaltgetriebe sowie der Elektromotor 30 befinden sich in dem Aufsteckmodul 40, welches auf den eigentlichen, druckfest konstruierten Spannzylinder 5 aufgesetzt ist. Vorzugsweise ebenfalls in dem Aufsteckmodul 40 angeordnet ist der Abstandssensor 35, welcher den Abstand A zu der Abstützfläche bzw. Flanschfläche 3 detektiert.

Innerhalb des Aufsteckmoduls 40 führen Antriebswege von dem Elektromotor 30 über das Umschaltgetriebe zu der Wechselbuchse 14 des Spannzylinders und zu der Drehhülse 10 des Spannzylinders. Die Drehkoppelung mit der Wechselbuchse 14 und mit der Drehhülse 10 erfolgt jeweils über Mehrkant-Verbindungen 51, so dass das Aufsteckmodul 40 ohne größeren Aufwand auf den eigentlichen Spannzylinder 5 aufsetzbar ist.

Bestandteil des Aufsteckmoduls 40 ist außerdem der bereits erwähnte, von Hand betätigbare Umschalter 47, mit dem der Bediener zwischen der ersten und der zweiten Betriebsart umschalten kann. Vorzugsweise befindet sich an dem Umschalter 47 ein Schaltbauteil oder ein Sensor, welches bzw. welcher der Prozesssteuereinheit 44 die Stellung des Umschalters 47 meldet.

Da das Gehäuse des Aufsteckmoduls 40 starr an dem Zylindergehäuse 7 fixiert ist, ist für den Abstandsensor 35 sichergestellt, dass die von diesem erfassten Abstandswerte A repräsentativ für die jeweiligen Höhenpositionen des Spannzylinders 5 sind.

Jedoch ließe sich der Abstandssensor 35 auch an anderer Stelle positionieren, sofern diese Position eine zu dem Zylindergehäuse 7 des Spannzylinders 5 starre Position ist. Zum Beispiel ist es möglich, den Abstandssensor 35 direkt in dem Stützrohr 8 des Zylindergehäuses 7 anzuordnen, womit eine Abstandsmessung in größtmöglicher Nähe zu der Aufstandsfläche 2A der Gewindemutter 2 erreicht wäre.

Ein Signalstrang 54 verbindet das Aufsteckmodul 40 mit dem extern angeordneten Versorgungsmodul 55, in welchem die Hydraulikpumpe 22 samt ihrer Hydrauliksteuerung, die Prozesssteuereinheit 44 und, als Bestandteil der Prozesssteuereinheit, das Dokumentationsmodul 45 für die Prozessdaten zusammengefasst sind. Der Signalstrang 54 kann zusätzlich die Versorgung des Elektromotors 30 bzw. der Elektromotoren mit Betriebsspannung übernehmen.

Soweit der Signalstrang 54 der Signalübertragung dient, kann diese auch drahtlos durchgeführt werden, indem am Aufsteckmodul 40 einerseits und an dem externen Modul 55 andererseits entsprechende Sende- und Empfangseinrichtungen vorhanden sind.

### Bezugszeichenliste

- 1: Gewindebolzen
- 1A: Gewindeendabschnitt
- 2: Gewindemutter, Mutter
- 2A: Aufstandsfläche Gewindemutter
- 3: Flanschfläche, Unterlage
- 5: Spannzylinder
- 6: Unterseite
- 7: Zylindergehäuse
- 8: Stützrohr
- 9: Öffnung

- 10: Drehhülse
- 11: Getriebe
- 14: Wechselbuchse
- 15: Kolben
- 16: Innengewinde
- 17: Feder
- 18: hydraulischer Arbeitsraum

- 20: Hydraulikanschluss
- 21: Hydraulikleitung
- 22: Hydraulikpumpe

- 26: radial erweiterter Abschnitt
- 27: Antriebsabschnitt

- 30: Antrieb, Elektromotor
- 35: Abstandssensor
- 40: Aufsteckmodul
- 44: Prozesssteuereinheit
- 45: Dokumentationsmodul
- 47: Handschalter, Umschalter

- 51: Vierkant-Verbindung
- 54: Signalstrang
- 55: externes Modul

- A: Abstand

## Patentansprüche

1. Verfahren zum dokumentierten Anziehen oder Nachziehen einer Schraubverbindung aus einem Gewindebolzen (1) und einer darauf aufgeschraubten, auf einer Flanschfläche (3) abgestützten Mutter (2), bei dem auf das freie Gewindeende (1A) des Gewindebolzens (1) eine Wechselbuchse (14) eines gegen die Flanschfläche (3) abgestützten Spannzylinders (5) aufgeschraubt wird, die Wechselbuchse (14) unter Längsdehnung des Gewindebolzens (1) hydraulisch angezogen und währenddessen die Mutter (2) durch Drehen einer drehfest mit der Mutter verbundenen Drehhülse (10) beigedreht wird, wobei Schaltmittel in einer ersten Betriebsart nur einen elektrischen Antrieb der Wechselbuchse (14) und in einer zweiten Betriebsart nur einen elektrischen Antrieb der Drehhülse (10) ermöglichen, wobei unter Einsatz einer mit einem Dokumentationsmodul (45) versehenen Prozesssteuereinheit (44)
a) die Schraubverbindung mittels einer an dem Spannzylinder (5) angeordneten Erfassungseinrichtung identifiziert, und ein die einzelne Schraubverbindung kennzeichnendes Identitätsmerkmal in dem Dokumentationsmodul (45) gespeichert wird,
b) nach dem Aufsetzen des Spannzylinders (5) auf die Schraubverbindung mittels eines an dem Spannzylinder (5) angeordneten Abstandssensors (35) ein Abstand (A) zu der Flanschfläche (3) erfasst, und der Prozesssteuereinheit (44) ein entsprechendes erstes Abstandssignal (A1) übermittelt wird,
c) sodann, in der ersten Betriebsart, die Wechselbuchse (14) auf das freie Gewindeende (1A) aufgeschraubt wird, und mittels des Abstandssensors (35) erneut der Abstand (A) zu der Flanschfläche (3) erfasst, und der Prozesssteuereinheit (44) ein entsprechendes zweites Abstandssignal (A2) übermittelt wird,
d) die Prozesssteuereinheit (44) aus der Differenz der Abstandssignale (A1, A2) die Größe des Gewindeeingriffs zwischen der Wechselbuchse (14) und dem freien Gewindeende (1A) des Gewindebolzens (1) ermittelt, und die Prozesssteuereinheit (44) nur bei Vorliegen eines vorgegebenen Mindestgewindeeingriffs ein Umschalten in die zweite Betriebsart freigibt,
e) nach dem Umschalten in die zweite Betriebsart der Gewindebolzen (1) längsgedehnt wird, und ein für die an der Wechselbuchse (14) wirkende Zugkraft und / oder den aufgewendeten hydraulischen Druck charakteristischer Lastwert in dem Dokumentationsmodul (45) gespeichert und dem jeweiligen Identitätsmerkmal zugewiesen wird,
f) während des Längsdehnens die Drehhülse (10) angetrieben wird, und das Antriebsmoment und / oder der zurückgelegte Drehwinkel der Drehhülse (10) in dem Dokumentationsmodul (45) gespeichert und dem jeweiligen Identitätsmerkmal zugewiesen wird.

2. Verfahren nach Anspruch 1, **dadurch gekennzeichnet, dass** das Identifizieren der Schraubverbindung durch Erfassen eines vorzugsweise an dem Gewindebolzen (1) vorhandenen RFID-Tags, QR-Codes oder Barcodes erfolgt.

3. Verfahren nach einem der Ansprüche 1 oder 2, **dadurch gekennzeichnet, dass** auch das Datum erfasst und dem jeweiligen Identitätsmerkmal zugewiesen wird.

4. Verfahren nach einem der Ansprüche 1 bis 2, **dadurch gekennzeichnet, dass** in der ersten Betriebsart das Aufschrauben der Wechselbuchse (14) zunächst mit einer vorgegebenen Drehzahl und/ oder einem vorgegebenen Drehmoment erfolgt und anschließend mit reduzierter Drehzahl und/ oder reduziertem Drehmoment.

5. Verfahren nach Anspruch 4, **dadurch gekennzeichnet, dass** die Größe der reduzierten Drehzahl bzw. des reduzierten Drehmoments durch die Prozesssteuereinheit (44) in Abhängigkeit von den Abstandssignalen (A) des Abstandssensors (35) gesteuert wird.

6. Verfahren nach einem der vorangehenden Ansprüche, **dadurch gekennzeichnet, dass** nach dem Umschalten in die zweite Betriebsart die dann folgenden Verfahrensschritte automatisch und wie folgt durch die Prozesssteuereinheit (44) gesteuert ablaufen:
- Aufbau zunächst einer hydraulischen Vorkraft, die nur 2% bis 12% der im weiteren Verfahren erzielten hydraulischen Endkraft beträgt,
- Antrieb der Drehhülse (10) bis zum Anlegen der Mutter (2) an der Flanschfläche (3), wobei die sich dabei ergebende Drehlage der Drehhülse (10) erfasst und als Drehwinkel-Ausgangswert gespeichert wird,
- Aufbau der hydraulischen Endkraft,
- erneuter Antrieb der Drehhülse (10) bis zum erneuten Anlegen der Mutter (2) an der Flanschfläche (3), hierbei Erfassen des gegenüber dem Drehwinkel-Ausgangswert zurückgelegten Drehwinkels der Drehhülse (10).

7. Verfahren nach einem der Ansprüche 1 bis 6, **dadurch gekennzeichnet, dass** der elektrische Antrieb der Wechselbuchse (14) und der elektrische Antrieb der Drehhülse (10) durch ein- und denselben Elektromotor (30) und über ein Umschaltgetriebe erfolgen, welches in der ersten Betriebsart seine erste Schaltstellung, und in der zweiten Betriebsart seine zweite Schaltstellung einnimmt.

8. Verfahren nach einem der Ansprüche 1 bis 6 **dadurch gekennzeichnet, dass** der elektrische Antrieb der Wechselbuchse (14) und der elektrische Antrieb der Drehhülse (10) durch zwei getrennte Elektromotoren erfolgen, wobei die Prozesssteuereinheit dazu ausgebildet ist, abhängig von der Betriebsart entweder nur den einen oder nur den anderen Elektromotor freizugeben.

## Claims

1. Method for the documented tightening or retightening of a screw connection made up of a threaded bolt (1) and a nut (2) screwed on to the latter and supported on a flange surface (3), in which an exchangeable socket (14) of a tensioning cylinder (5) supported against the flange surface (3) is screwed on to the free threaded end (1A) of the threaded bolt (1), the exchangeable socket (14) is hydraulically tightened with longitudinal expansion of the threaded bolt (1) and in the meantime the nut (2) is corotated by rotation of a rotary sleeve (10) connected to the nut for conjoint rotation, wherein switching means, in a first operating mode, allow only the exchangeable socket (14) to be electrically driven and, in a second operating mode, allow only the rotary sleeve (10) to be electrically driven, wherein, using a process control unit (44) provided with a documentation module (45),
a) the screw connection is identified by means of a sensing device arranged on the tensioning cylinder (5), and an identity feature characterizing the individual screw connection is stored in the documentation module (45),
b) after the tensioning cylinder (5) has been placed on the screw connection, a distance (A) from the flange surface (3) is sensed by means of a distance sensor (35) arranged on the tensioning cylinder (5), and a corresponding first distance signal (A1) is transmitted to the process control unit (44),
c) then, in the first operating mode, the exchangeable socket (14) is screwed on to the free threaded end (1A), and the distance (A) from the flange surface (3) is again sensed by means of the distance sensor (35), and a corresponding second distance signal (A2) is transmitted to the process control unit (44),
d) the process control unit (44) determines, from the difference between the distance signals (A1, A2), the size of the thread engagement between the exchangeable socket (14) and the free threaded end (1A) of the threaded bolt (1), and the process control unit (44) enables switching into the second operating mode only if there is a predefined minimum amount of thread engagement,
e) after switching into the second operating mode, the threaded bolt (1) is longitudinally expanded, and a load value that is characteristic for the tension force acting on the exchangeable socket (14) and/or for the hydraulic pressure applied is stored in the documentation module (45) and assigned to the respective identity feature,
f) during the longitudinal expansion, the rotary sleeve (10) is driven, and the drive torque and/or the angle of rotation covered by the rotary sleeve (10) is stored in the documentation module (45) and assigned to the respective identity feature.

2. Method according to Claim 1, **characterized in that** the screw connection is identified by sensing an RFID tag, QR code or barcode present preferably on the threaded bolt (1).

3. Method according to either of Claims 1 and 2, **characterized in that** the date is also sensed and assigned to the respective identity feature.

4. Method according to either of Claims 1 and 2, **characterized in that**, in the first operating mode, the exchangeable socket (14) is screwed on initially at a predefined speed and/or with a predefined torque and subsequently at a reduced speed and/or with a reduced torque.

5. Method according to Claim 4, **characterized in that** the amount by which the speed or the torque is reduced is controlled by the process control unit (44) depending on the distance signals (A) from the distance sensor (35).

6. Method according to one of the preceding claims, **characterized in that**, after switching into the second operating mode, the following method steps proceed automatically and as follows in a manner controlled by the process control unit (44):
- first of all a hydraulic preliminary force is built up, which amounts to only 2% to 12% of the hydraulic end force achieved in the rest of the method,
- the rotary sleeve (10) is driven until the nut (2) bears against the flange surface (3), wherein the resultant rotary position of the rotary sleeve (10) is sensed and stored as an initial angle of rotation value,
- the hydraulic end force is built up,
- the rotary sleeve (10) is driven again until the nut (2) bears against the flange surface (3) again, and in the process the angle of rotation covered by the rotary sleeve (10) compared with the initial angle of rotation value is sensed.

7. Method according to one of Claims 1 to 6, **characterized in that** the exchangeable socket (14) and the rotary sleeve (10) are electrically driven by one and the same electric motor (30) and via a switching gear that adopts its first switched position in the first operating mode and its second switched position in the second operating mode.

8. Method according to one of Claims 1 to 6, **characterized in that** the exchangeable socket (14) and the rotary sleeve (10) are electrically driven by two separate electric motors, wherein the process control unit is configured to enable either only one or only the other electric motor depending on the operating mode.

## Revendications

1. Procédé de vissage ou de resserrage documenté d'un raccord à vis composé d'un boulon fileté (1) et d'un écrou (2) vissé sur celui-ci et s'appuyant sur une surface de bride (3), dans lequel une douille interchangeable (14) d'un cylindre de serrage (5) s'appuyant sur la surface de bride (3) est vissée sur l'extrémité filetée libre (1A) du boulon fileté (1), la douille interchangeable (14) est serrée de manière hydraulique avec allongement longitudinal du boulon fileté (1), et pendant ce temps-là, l'écrou (2) est rapproché par la rotation d'une douille tournante (10) reliée à l'écrou de manière solidaire en rotation, dans lequel des moyens de commutation permettent dans un premier mode de fonctionnement seulement un entraînement électrique de la douille interchangeable (14) et permettent dans un deuxième mode de fonctionnement seulement un entraînement électrique de la douille tournante (10),
dans lequel, par la mise en œuvre d'une unité de commande de processus (44) dotée d'un module de documentation (45)
a) le raccord à vis est identifié au moyen d'un dispositif de détection disposé au niveau du cylindre de serrage (5), et un attribut d'identification caractérisant le raccord à vis individuel est stocké dans le module de documentation (45),
b) après la mise en place du cylindre de serrage (5) sur le raccord à vis, un capteur de distance (35) disposé sur le cylindre de serrage (5) détecte une distance (A) par rapport à la surface de bride (3), et un premier signal de distance correspondant (A1) est transmis à l'unité de commande de processus (44),
c) ensuite, dans le premier mode de fonctionnement, la douille interchangeable (14) est vissée sur l'extrémité filetée libre (1A), et le capteur de distance (35) détecte à nouveau la distance (A) par rapport à la surface de bride (3), et un deuxième signal de distance (A2) correspondant est transmis à l'unité de commande de processus (44),
d) l'unité de commande de processus (44) détermine à partir de la différence des signaux de distance (A1, A2) le degré de la prise filetée entre la douille interchangeable (14) et l'extrémité filetée libre (1A) du boulon fileté (1), et l'unité de commande de processus (44) ne libère une commutation sur le deuxième mode de fonctionnement qu'en cas de présence d'une prise filetée minimale prédéfinie,
e) après la commutation sur le deuxième mode de fonctionnement, le boulon fileté (1) subit un allongement longitudinal, et une valeur de charge caractéristique de la force de traction agissant au niveau de la douille interchangeable (14) et/ou de la pression hydraulique exercée est stockée dans le module de documentation (45) et affectée à l'attribut d'identification respectif,
f) pendant l'allongement longitudinal, la douille tournante (10) est entraînée, et le couple d'entraînement et/ou l'angle de rotation parcouru de la douille tournante (10) sont stockés dans le module de documentation (45) et affectés à l'attribut d'identification respectif.

2. Procédé selon la revendication 1, **caractérisé en ce que** l'identification du raccord à vis est effectuée par la détection d'une étiquette RFID, d'un code QR ou d'un code à barres présent(e) de préférence sur le boulon fileté (1).

3. Procédé selon l'une quelconque des revendications 1 et 2, **caractérisé en ce que** la date est également détectée et affectée à l'attribut d'identification respectif.

4. Procédé selon l'une quelconque des revendications 1 à 2, **caractérisé en ce que** dans le premier mode de fonctionnement, le vissage de la douille interchangeable (14) est d'abord effectué à une vitesse de rotation prédéfinie et/ou à un couple de rotation prédéfini, et ensuite, à une vitesse de rotation réduite et/ou à un couple de rotation réduit.

5. Procédé selon la revendication 4, **caractérisé en ce que** la grandeur de la vitesse de rotation réduite ou du couple de rotation réduit est commandée par l'unité de commande de processus (44) en fonction des signaux de distance (A) du capteur de distance (35).

6. Procédé selon l'une quelconque des revendications précédentes, **caractérisé en ce qu'**après la commutation sur le deuxième mode de fonctionnement, les étapes de procédé qui suivent alors se déroulent automatiquement et de manière commandée par l'unité de commande de processus (44) comme suit :
- d'abord développement d'une pression préliminaire hydraulique qui n'est que de 2 % à 12 % de la force finale hydraulique obtenue dans la suite du procédé,
- entraînement de la douille tournante (10) jusqu'à l'application de l'écrou (2) contre la surface de bride (3), la position de rotation résultante de la douille tournante (10) étant détectée et stockée sous la forme d'une valeur de départ d'angle de rotation,
- développement de la force finale hydraulique,
- nouvel entraînement de la douille tournante (10) jusqu'à une nouvelle application de l'écrou (2) contre la surface de bride (3), alors détection de l'angle de rotation de la douille tournante (10) parcouru par rapport à la valeur de départ d'angle de rotation.

7. Procédé selon l'une quelconque des revendications 1 à 6, **caractérisé en ce que** l'entraînement électrique de la douille interchangeable (14) et l'entraînement électrique de la douille tournante (10) sont effectués par un seul et même moteur électrique (30) et par un correcteur de rapport qui adopte sa première position de commutation dans le premier mode de fonctionnement et sa deuxième position de commutation dans le deuxième mode de fonctionnement.

8. Procédé selon l'une quelconque des revendications 1 à 6, **caractérisé en ce que** l'entraînement électrique de la douille interchangeable (14) et l'entraînement électrique de la douille tournante (10) sont effectués par deux moteurs électriques séparés, l'unité de commande de processus étant réalisée pour libérer soit uniquement un moteur électrique, soit uniquement l'autre moteur électrique en fonction du mode de fonctionnement.
